Europäisches Patentamt

European Patent Office

Office européen des brevets

(11) Veröffentlichungsnummer: **0 027 660**
**A1**

(12) **EUROPÄISCHE PATENTANMELDUNG**

(21) Anmeldenummer: **80106403.1**

(22) Anmeldetag: **21.10.80**

(51) Int. Cl.³: **A 47 C 7/38**
**F 16 G 13/06**

(30) Priorität: **23.10.79 DE 2942672**

(43) Veröffentlichungstag der Anmeldung:
**29.04.81 Patentblatt 81/17**

(84) Benannte Vertragsstaaten:
**BE DE FR GB IT LU NL**

(71) Anmelder: **No-Sag Drahtfedern GmbH**

**D-4835 Rietberg 2 - Neuenkirchen(DE)**

(72) Erfinder: **Grosserüschkamp, Johannes**
**Reckerdamm 48**
**D-4837 Verl(DE)**

(72) Erfinder: **Denzel, Werner**
**Kreuzbreede 2**
**D-4835 Rietberg 2(DE)**

(74) Vertreter: **Buschhoff, Josef, Dipl.-Ing. et al,**
**Patentanwälte Dipl.-Ing. Buschhoff Dipl.-Ing. Hennicke,**
**Dipl.-Ing. Vollbach Kaiser-Wilhelm-Ring 24 Postfach 190**
**408**
**D-5000 Köln 1(DE)**

(54) Beschlag zur gelenkigen Verbindung von Möbelteilen.

(57) Beschlag zur gelenkigen Verbindung von Möbelteilen,
der aus mehreren, nach Art einer Laschenkette gelenkig miteinander verbundenen, U- oder winkelförmigen Laschengliedern (15 bis 21) besteht, welche Vorsprünge (35) und
Anschläge (34) aufweisen, welche den Schwenkwinkel (α)
zwischen den einzelnen Laschengliedern (15 bis 21) und
damit die Krümmung der Laschenkette begrenzen und andererseits die Laschenkette (12) in einer gestreckten Lage der
Laschenglieder versteifen.

EP 0 027 660 A1

./...

FIG. 2

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

0027660

Aktenz.:

Reg.-Nr.

Ns 254 EU

bitte angeben

KÖLN, den 14.10.1980 He/B)

Anm.:　NO-SAG Drahtfedern GmbH
　　　　D - 4835 Rietberg 2 - Neuenkirchen

Titel:　Beschlag zur gelenkigen Verbindung von Möbelteilen

Die Erfindung betrifft einen Beschlag zur gelenkigen Verbindung von Möbelteilen, insbesondere einer Kopfstütze mit
der Lehne eines Sessels od. dgl.

Es ist bekannt, eine Kopfstütze mit der Lehne eines Sessels
derart gelenkig zu verbinden, daß die Kopfstütze nach
vorn auf die Lehne geklappt werden kann, wo sie dann als
Nackenrolle dient. Die hierfür verwendeten Scharniere haben
den Nachteil, daß sich die Nackenrolle nur um eine einzige
Achse drehen kann, die gewöhnlich an der Verbindungsstelle
zwischen Rückenlehne und Kopfstütze liegt. Die Nackenrolle
bleibt deshalb immer sehr nah am oberen Rand des Sessels und
hat dann oft eine zu hohe Lage. Außerdem drückt sie die Polsterung der Lehne am oberen Rand verhältnismäßig weit ein,
wenn sie zur Verwendung als Nackenrolle ganz heruntergeklappt
wird.

Aufgabe der Erfindung ist es, einen Beschlag zur gelenkigen
Verbindung von Möbelteilen, insbesondere einer Kopfstütze
mit der Lehne eines Polstersessels, zu schaffen, der eine
Biegeverstellung des einen Möbelteiles gegenüber dem anderen
längs eines großen Weges gestattet und dessen Biegeradius
unterschiedlich sein kann.

- 2-

Diese Aufgabe wird mit der Erfindung durch eine Laschenkette
mit durch Gelenke miteinander verbundenen Laschen-
gliedern/von denen mindestens jedes zweite Laschenglied an
gelöst
mindestens einem Ende einen Vorsprung und/oder einen Anschlag
aufweist, wobei die Vorsprünge und Anschläge aufeinanderfolgender Laschenglieder gegeneinander stoßen können und derart ausgebildet und angeordnet sind, daß zwischen zwei Laschengliedern ein bestimmter Schwenkwinkel in mindestens einer
Richtung nicht überschritten wird.

Ein solcher Beschlag hat den Vorteil, daß ein großer Biegeradius erzielt werden kann, da der eine Möbelteil gegenüber
dem anderen nicht nur um eine einzige, sondern um mehrere
zueinander parallele Achsen schwenken kann, welche von den
Gelenken der Laschenkette gebildet werden. Es ist deshalb
möglich, auch dick gepolsterte Teile so übereinanderzuschwenken,
daß sich ihre Polsterflächen zwar berühren, aber nicht gegenseitig zusammendrücken. Dies ist insbesondere bei gepolsterten
Kopfstützen von Vorteil, die als Nackenrollen verwendet und
zu diesem Zwecke auf die Rückenlehne eines Polstersessels niedergeschwenkt werden sollen.

Bei einer ersten zweckmäßigen Ausführung-sform kann jedes
Laschenglied an seinem einen Ende einen über die benachbarte
Gelenkachse hinausreichenden Vorsprung und in der Nähe ihres
anderen Endes einen Anschlag aufweisen. Dies hat den Vorteil,
daß alle Laschenglieder untereinander gleich ausgebildet sein
können.

Bei einer anderen Ausführungsform der Erfindung besteht die
Laschenkette aus mit-einander abwechselnden breiten Laschengliedern und schmalen Laschengliedern, wobei die schmalen
Laschenglieder zwischen den breiten Laschengliedern angeordnet
sind. Eine solche Ausführung ist besonders robust und einfach herzustellen, da die Laschenglieder aus im Querschnitt rechteckigen Rohrstücken oder Abschnitten aus U- oder Winkel-
Profilstählen bestehen können. Bei dieser Ausführungsform haben
zweckmäßig die schmalen Laschenglieder an beiden Enden Vorsprünge, während die breiten Laschenglieder an beiden Enden
Anschläge für die Vorsprünge der schmalen Laschenglieder aufweisen.

Besonders zweckmäßig ist es, wenn der Anschlag ein über
eine Seitenfläche des Laschengliedes vorspringender Teil
ist, gegen welchen im abgewinkelten Zustand einerseits
der Vorsprung und im gestreckten Zustand andererseits ein
Längsrand des nächstfolgenden Laschengliedes stößt. Diese
Ausbildung hat den Vorteil, daß die Laschenkette einerseits eine gekrümmte und andererseits eine gestreckte Endlage einnehmen kann. Als Verbindungselement einer Kopfstütze mit der Lehne eines Sessels fluchtet die Laschenkette dann in ihrer gestreckten Lage mit der Rückenlehne
des Sessels und hält die Kopfstütze in ihrer aufrechten
Lage, wobei sie gleichzeitig verhindert daß die Kopfstütze nach hinten umklappen kann. Andererseits ist es
möglich, die Kopfstütze nach vorn zu klappen, wobei die
Laschenkette ihre gekrümmte Lage einnimmt, in der sie
die Kopfstütze als Nackenrolle trägt und festhält, während
die Vorsprünge der Laschenglieder an den über die Seitenflächen vorspringenden Teilen der benachbarten Laschenglieder anliegen.

Die Laschenglieder können im Querschnitt U-förmige Stücke
sein, deren Schenkel die Gelenke zur Verbindung mit den
benachbarten Laschengliedern und die Vorsprünge aufweisen
und deren Stege den Anschlag für die Vorsprünge und/oder
die Längsränder des nächstfolgenden Laschengliedes bilden.
Hierbei sind die Schenkel wenigstens an einer Stirnseite
von mindestens einem Laschenglied zum Steg hin derart abgeschrägt, daß sie gegenüber diesem einen Vorsprung bilden, der den Schwenkwinkel zwischen benachbarten Laschengliedern begrenzt, wenn sich die Laschenkette in ihrer gekrümmten Stellung befindet. In der gestreckten Lage dagegen liegen die Seitenränder und der diese verbindende Steg an der Innenfläche des Steges des benachbarten Laschengliedes an, so daß die Laschenglieder in der gestreckten Lage der Laschenkette festgehalten werden.

Besonders zweckmäßig ist es, wenn die einzelnen Laschenglieder an den Stirnseiten ihrer Schenkelabschrägungen von unterschiedlicher Neigung und/oder Größe sind. Bei dieser Ausbildung hat die Laschenkette im gekrümmten Endzustand, in dem der Vorsprung eines jeden Laschengliedes gegen den Anschlag des benachbarten Laschengliedes stößt, einen wechselnden Krümmungsradius, der beispielsweise von dem ersten, an der Rückenlehne eines Polstersessels befestigten Laschenglied bis zum letzten, an einer Kopfstütze befestigten Laschenglied immer kleiner werden kann. Es ist auch möglich, durch entsprechende Wahl der Neigung und/oder Größe der Abschrägung bei den einzelnen Laschengliedern die Laschenkette so auszugestalten, daß sie im vollständig zusammengebogenen Zustand an ihren Enden einen kleinen Krümmungsradius und im mittleren Bereich einen wesentlich größeren Krümmungsradius aufweist.

Die Schenkel können um das Maß der Materialdicke der Laschenglieder verkröpft sein. Hierdurch ist es möglich, alle Laschenglieder der Laschenkette des Beschlages gleich auszubilden, wobei es jedoch auch hier möglich ist, den Abschrägungen verschiedener Laschenglieder eine unterschiedliche Neigung zu geben.

Bei einer anderen Ausführungsform der Erfindung können die Laschenglieder auch Winkelstücke sein, deren einer Schenkel die Gelenke zur Verbindung mit den benachbarten Laschengliedern und den Vorsprung aufweist und deren anderer Schenkel den Anschlag für den Vorsprung und/oder für
den einen Längsrand des nächstfolgenden Laschengliedes bildet. Außerdem können die Laschenglieder natürlich auch aus
flachen Blechstücken bestehen, an denen seitlich Anschläge
angebracht sind, gegen die jeweils der Vorsprung des benachbarten Laschengliedes stößt.

Bei einer Laschenkette mit schmalen und breiten Laschengliedern ist es zweckmäßig, wenn die schmalen Laschenglieder
mit ihrer einen, parallel zu den Gelenkachsen verlaufenden
Außenfläche an der entsprechenden Innenwand der benachbarten,
breiten Laschenglieder anliegen und an beiden Enden derart
schräg abgeschnitten sind, daß der in der an der Innenwand
anliegenden Außenfläche befindliche Schnittrand innenseits
oder in der durch die entsprechende Gelenkachse gehenden,
zu dieser Außenfläche senkrechten Ebene liegt. Hierdurch
wird erreicht, daß im gestreckten Zustand der Laschenkette
die die Anschläge bildenden Stege der Laschenglieder auch
im Bereich der Gelenke dicht aufeinanderliegen, so daß die
Laschenkette eine geradlinige Form hat und nicht überstreckt
werden kann. Andererseits können die schmalen Laschenglieder
in den sie umfassenden breiten Laschengliedern ungehindert
so weit schwenken, bis ihre schräg abgeschnittene Stirnkante an der Innenwand des breiteren Laschengliedes anliegt,
welche ihre Schwenkbewegung begrenzt.

Besonders zweckmäßig ist es, wenn zwischen den Schenkeln
aufeinanderfolgender Laschenglieder im Bereich der Gelenke
Tellerfedern angeordnet sind. Diese Tellerfedern erzeugen
im Bereich der Gelenke zwischen den einzelnen Laschengliedern Klemmkräfte, welche die Laschenglieder nicht nur in
ihren gestreckten oder abgewinkelten Endstellungen, sondern
auch in jeder Zwischenlage festhalten. Um die Klemmwirkung stets aufrecht zu erhalten, ist es zweckmäßig, wenn
die Gelenke Nietbolzen sind, die je zwei aufeinanderfolgende Laschenglieder durchqueren und von Rohrstücken umgeben werden, die zwischen die jeweils außenliegenden
Schenkel von zwei durch das Gelenk miteinander zu verbindenden Laschengliedern eingepaßt sind.

Weitere Merkmale und Vorteile der Erfindung ergeben sich
aus der nachfolgenden Beschreibung und den Zeichnungen,
in denen bevorzugte Ausführungsformen der Erfindung
an Beispielen näher erläutert sind. Es zeigt:

Fig. 1   die Rückenlehne eines Polstersessels, an der
         eine Kopfstütze mit einem Beschlag nach der
         Erfindung gelenkig befestigt ist, in einer
         seitlichen Ansicht,

Fig. 2   den Beschlag nach der Erfindung in einer
         seitlichen Ansicht in seiner gestreckten
         und in seiner vollständig gekrümmten Lage,

Fig. 3   ein Laschenglied des Beschlages nach der
         Erfindung in einer perspektivischen Darstellung,

Fig. 4   das Laschenglied nach Fig. 3 in einer Untersicht,

Fig. 5   den ebenen Blechzuschnitt für das Laschenglied nach Fig. 3 im Grundriß,

Fig. 6   drei Laschenglieder einer anderen Ausführungs-
         form des Beschlages nach der Erfindung in
         einer seitlichen Ansicht und teilweise im
         Längsschnitt und

Fig. 7   den Gegenstand der Fig. 6 in einem Längsschnitt nach Linie VII-VII.

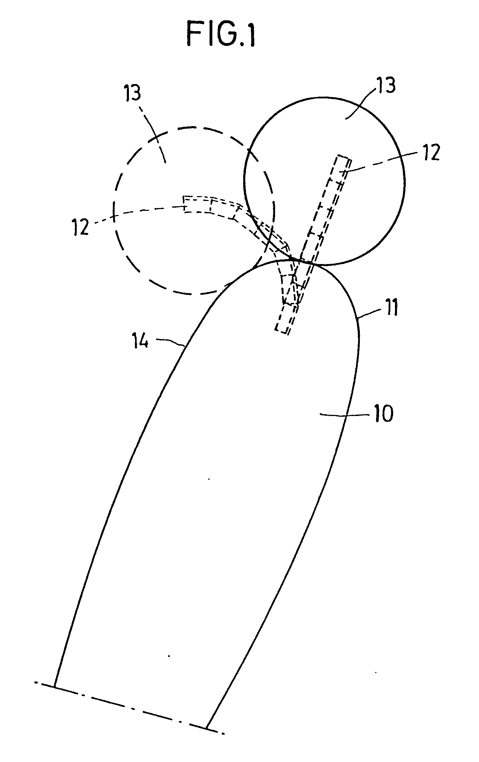

In den Zeichnungen ist mit 10 die Rückenlehne eines Polstersessels bezeichnet, an deren oberem Rand 11 mit zwei
im seitlichen Abstand voneinander angeordneten Beschlägen
12 eine gepolsterte Kopfstütze 13 befestigt ist, die nach
vorne auf die dem Rücken des Benutzers zugekehrte Vorderfläche 14 umgeklappt werden kann. In dieser umgeklappten
Stellung, die in Fig. 1 in strichierten Linien angedeutet
ist, dient die Kopfstütze 13 dann als Nackenrolle.

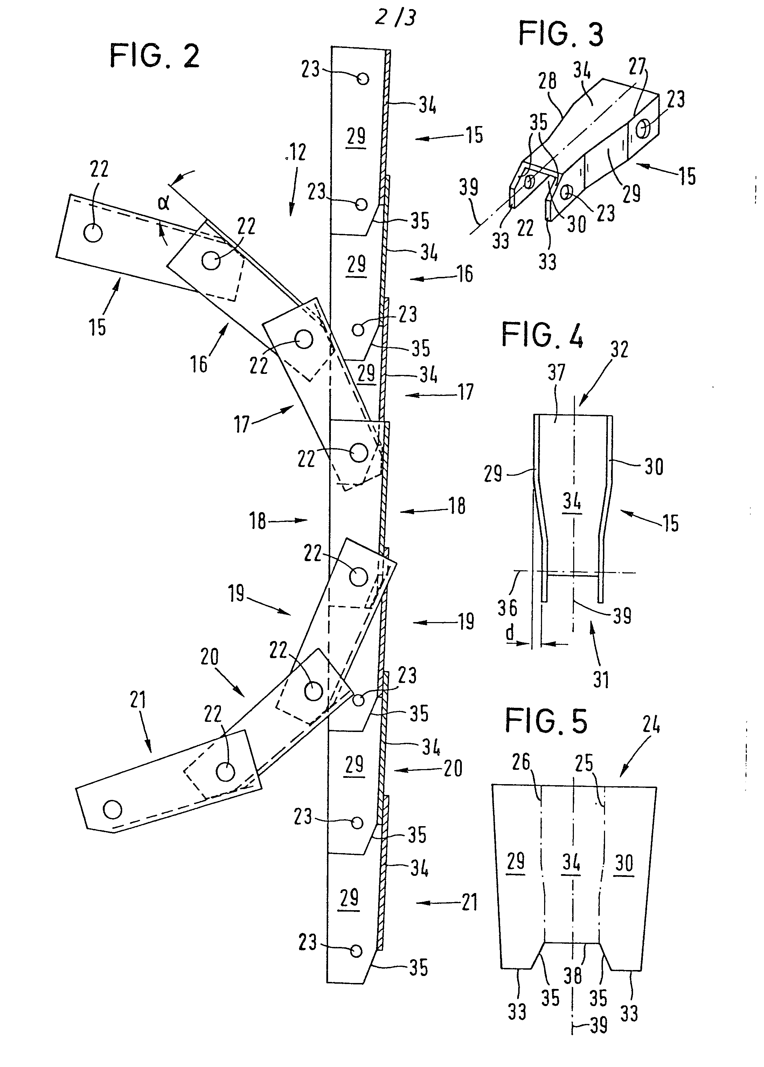

Jeder der beiden Beschläge 12 wird von einer Laschenkette
gebildet, die in Fig. 2 in gestreckter Lage im Längsschnitt und in gebogener Stellung in einer Seitenansicht
dargestellt ist. Die Laschenkette besteht aus mehreren
Laschengliedern 15 bis 21, die untereinander gleich ausgebildet und durch Gelenke 22 und 23 miteinander verbunden
sind. Jedes der Laschenglieder 15 bis 21 besteht aus einem
Blechstück 24 mit der in Fig. 5 dargestellten Form, das
längs der strichpunktierten Linien 25 und 26 zu einem im
Querschnitt- U-förmigen Laschenglied zusammengebogen ist.
Hierbei sind die Biegelinien 25 und 26, die im gebogenen
Zustand die oberen Längsränder 27 und 28 des Laschengliedes
bilden, so geführt, daß die beiden Schenkel 29 und 30
des U-förmigen Laschengliedes um das Maß der Materialdicke
d in Längsrichtung verkröpft sind. Hierdurch kann das vordere Ende 31 eines jeden Laschengliedes in das hintere Ende 32 des nächstfolgenden Laschengliedes eingesteckt und
mit diesem durch Gelenkbolzen oder Gelenknieten 22 und 23
verbunden werden.

Die beiden Schenkel 29 und 30 eines jeden Laschengliedes
15 bis 21 haben am vorderen Ende 31 eine von der vorderen
Stirnseite 33 zum Steg 34 hin verlaufende Abschrägung 35,
die in bezug auf die durch die Gelenke 22 und 23 am vorderen Ende 31 des jeweiligen Laschengliedes gehende Gelenkachse 36 Vorsprünge bildet. Man erkennt aus Fig. 2, daß diese Vorsprünge 35 eines jeden Laschengliedes 15 bis 21
gegen die Unterseite 37 des Steges 34 des jeweils vorhergehenden Laschengliedes 16 bis 21 stoßen, wenn die durch
die Gelenke 22 und 23 miteinander verbundenen Laschenglieder 15 bis 21 soweit verschwenkt werden, daß der größtmögliche Schwenkwinkel $\alpha$ zwischen zwei Laschengliedern erreicht wird. Der Steg 34 eines jeden Laschengliedes 16
bis 21 bildet also im Bereich des hinteren Endes 32 des
Laschengliedes den Anschlag für die Vorsprünge 35 des
nächstfolgenden Laschengliedes 15 bis 20. Im gestreckten
Zustand der Laschenkette 12 dagegen stoßen die Längsränder 27 und 28 und der mit ihnen verbundene Steg 34 gegen
die Unterseite 37 des Steges 34 am hinteren Ende 32 des
jeweils vorhergehenden Laschengliedes. Die Laschenkette
kann sich deshalb nur in einer Richtung krümmen, während
sie in ihrer gestreckten Lage versteift wird und wie ein
unnachgiebiger Stab wirkt.

Man erkennt, daß es möglich ist, den größtmöglichen
Schwenkwinkel $\alpha$ zwischen zwei Laschengliedern in einfacher Weise dadurch zu variieren, daß man die vorderen Kanten der Schenkel 29 und 30 der Laschenglieder mehr oder
weniger schräg abschneidet bzw. den in Fig. 5 gezeigten
Zuschnitt des Laschenstückes so ausstanzt, daß die von den
Abschrägungen 35 und der Vorderkante 38 begrenzte Ausnehmung größer oder kleiner ist. Hierdurch lassen sich in einfacher Weise verschiedene Krümmungen der Laschenkette im
Endzustand erreichen. Beispielsweise kann es zweckmäßig
sein, den Beschlag so auszubilden, daß er in seinem unteren, an der Sessellehne 10 befestigten Bereich einen kleinen Krümmungsradius und im oberen, an der Kopfstütze 13,
befestigten Bereich einen großen Krümmungsradius hat oder
umgekehrt. Speziell bei einer Kopfstütze für Polstermöbel
kann es erforderlich sein, daß die Laschenkette im gebogenen Zustand U-förmig verläuft. Allen gewünschten Krümmungen und Formen kann der Beschlag nach der Erfindung durch unterschiedliche Abschrägung der einzelnen Laschenglieder
in einfacher Weise angepaßt werden.

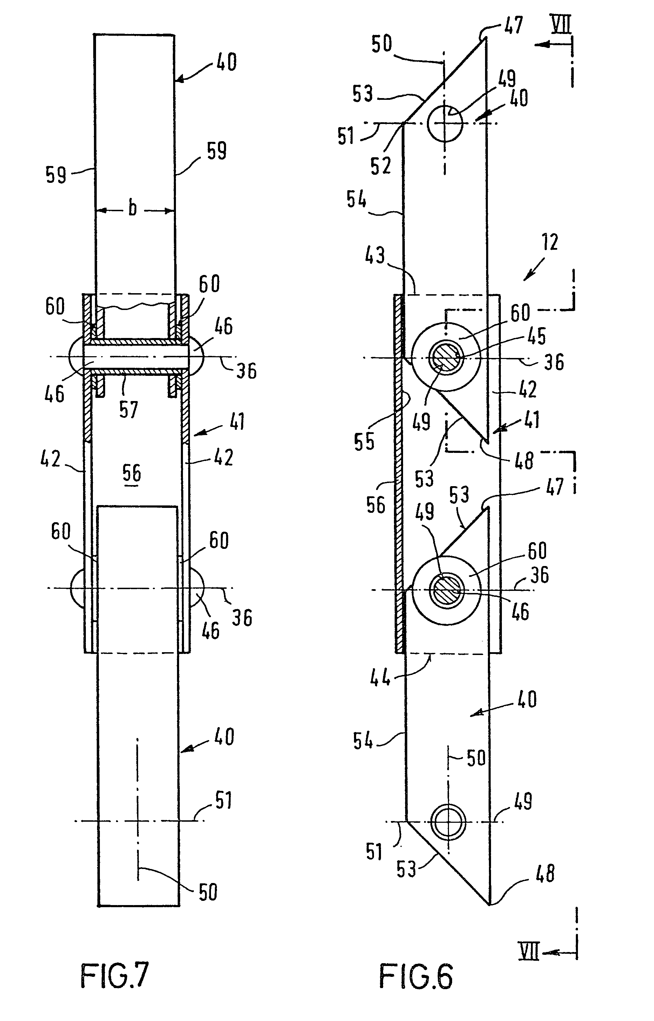

In den Fig. 6 und 7 ist eine andere Ausführungsform gezeigt, bei der der Beschlag 12 aus miteinander abwechselnden schmalen Laschengliedern 40 und breiten Laschengliedern/besteht. Die breiten Laschenglieder 41 sind Abschnitte
    einer U-Profilleiste, deren Schenkel 42 in gewissem
Abstand von den Enden 43 und 44 Bohrungen 45 für Nietbolzen 46 aufweisen, die als Gelenkbolzen dienen. Die schmalen
Laschenglieder 40 bestehen aus im Querschnitt rechteckigen
Rohrstücken, die an ihren beiden Enden 47 und 48 schräg
abgeschnitten sind. Die schmalen Laschenglieder 40 haben
eine solche Breite b, daß sie mit geringem Spiel zwischen
die Schenkel 42 der breiten Laschenglieder 41 passen.
Jedes schmale Laschenglied 40 hat im Abstand von seinen
Enden 47 und 48 zwei Bohrungen 49, durch welche die Nietbolzen 46 hindurchgesteckt werden können. Die Bohrungen 49
liegen in einer zur Längsachse 50 eines jeden schmalen
Laschengliedes 40 senkrechten Ebene 51, die durch den
Schnittrand 52 geht, den die als Vorsprung dienende Schrägfläche 53 mit der Außenfläche 54 des Rohrstückes bildet,
welche im gestreckten Zustand der Laschenkette an der Innenwand 55 des Steges 56 des breiten Laschengliedes 41 anliegt.

Man erkennt aus Fig. 7, daß jeder Nietbolzen 46 von einer
Hülse 57 umgeben wird, welche die Bohrungen 49 im schmaleren
Laschenglied 40 durchdringt und an den Innenwandungen 58
der Schenkel 42 des breiten Laschengliedes 41 fest anliegt.
Man erkennt auch, daß in dem schmalen Zwischenraum zwischen
den Schenkeln 42 und den Seitenwänden 59 der schmalen
Laschenglieder 40 im Bereich der Gelenkbolzen 46 Tellerfedern 60 angeordnet sind, welche die Hülse 57 umgeben
und zwischen dem schmalen Laschenglied 40 und dem breiten
Laschenglied 41 eine Klemmwirkung erzeugen , die auch nach
langjährigem Gebrauch nicht nachläßt.

Die Anordnung der schmalen Laschenglieder 40 und der
breiten Laschenglieder 41 zueinander ist so getroffen,
daß die Außenflächen 54 der schmalen Laschenglieder 40
im gestreckten Zustand des Beschlages 12 dicht an der
Innenwand 55 der breiten Laschenglieder 41 anliegen.
Der Beschlag bildet dann im gestreckten Zustand einen
geradlinigen Stab, der sich nicht rückwärts, d.h. entgegen der gewollten Biegerichtung durchbiegen kann.

Die Erfindung ist nicht auf die dargestellten Ausführungsbeispiele beschränkt. Beispielsweise können die Laschenglieder auch Winkelstücke sein, deren einer Schenkel die
Gelenke zur Verbindung mit den benachbarten Laschengliedern und den Vorsprung aufweist und deren anderer
Schenkel den Anschlag für den Vorsprung und/oder für den
einen Längsrand der nächstfolgenden Laschenglieder bildet.
Der Beschlag setzt sich dann aus Laschengliedern zusammen,
welche aus den in den Fig. 3 bis 5 dargestellten Elementen
bestehen,die jedoch nach ihrer Längsmittellinie halbiert
sind. Analog könnten auch die Laschenglieder der in den
Fig. 6 und 7 gezeigten Ausführungsform aus Winkelstücken
oder U-Profilstücken bestehen. Ferner können die Laschenglieder nicht nur aus Blech, sondern auch aus anderen
Materialien, beispielsweise aus einem harten Kunststoff
hergestellt werden und es ist auch möglich, anstelle der
Gelenkbolzen andere Gelenkverbindungen für die Laschenglieder zu verwenden. Der Rahmen der Erfindung wird hierdurch nicht überschritten.

0027660

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

Aktenz.:

Reg.-Nr.

Ns 254 EU

bitte angeben

KÖLN, den 14.10.1980 He/Br

Anm.: NO-SAG Drahtfedern GmbH
4835 Rietberg 2 - Neuenkirchen

Titel: Beschlag zur gelenkigen Verbindung von
Möbelteilen

A n s p r ü c h e

1. Beschlag zur gelenkigen Verbindung von Möbelteilen,
insbesondere einer Kopfstütze (13) mit der Lehne (10)
eines Sessels od. dgl., gekennzeichnet durch eine
Laschenkette (12) mit durch Gelenke (22,23) miteinander verbundenen Laschengliedern (15 bis 21 bzw. 40,41),
von denen mindestens jedes zweite Laschenglied an
mindestens einem Ende (31 bzw. 47) einen Vorsprung (35)
und/oder einen Anschlag (34 bzw. 54 bzw. 55) aufweist,
wobei die Vorsprünge (35)und Anschläge (34 bzw. 54,55)
aufeinanderfolgender Laschenglieder ( 15 bis 21 bzw. 40,41)
gegeneinander stoßen können und derart ausgebildet und
angeordnet sind, daß zwischen zwei Laschengliedern (z.B.
15 und 16) ein bestimmter Schwenkwinkel ($\alpha$) in mindestens
einer Richtung nicht überschritten wird.

2. Beschlag nach Anspruch 1, dadurch gekennzeichnet, daß
jedes Laschenglied (15 bis 21) an seinem einen Ende (31)
einen über die benachbarte Gelenkachse (36) hinausreichenden Vorsprung (35) und in der Nähe ihres anderen
Endes (32) einen Anschlag (34) aufweist.

3. Beschlag nach Anspruch 1 oder 2, dadurch gekennzeichnet, daß die Laschenkette aus miteinander abwechselnden breiten Laschengliedern (41) und schmalen Laschengliedern (40) besteht, wobei die schmalen Laschenglieder (40) zwischen den breiten Laschengliedern (41) angeordnet sind.

4. Beschlag nach Anspruch 1 und 3, dadurch gekennzeichnet, daß die schmalen Laschenglieder (40) an beiden Enden (47 und 48) Vorsprünge und die breiten Laschenglieder (41) an beiden Enden (43,44) Anschläge (55) für die Vorsprünge der schmalen Laschenglieder (40) aufweisen.

5. Beschlag nach einem der Ansprüche 1 bis 4, dadurch gekennueichnet, daß jeder Anschlag (34) ein über eine Seitenfläche (29 bzw. 30) des Laschengliedes (15 bis 20) vorspringender Teil ist, gegen welchen im abgewinkelten Zustand einerseits der Vorsprung (35) und im gestreckten Zustand andererseits ein Längsrand (27 bzw. 28) des nächstfolgenden Laschengliedes (16 bis 21) stößt.

6. Beschlag nach einem der Ansprüche 1 bis 5, dadurch gekennzeichnet, daß die Laschenglieder (15 bis 20) im Querschnitt U-förmige Stücke sind, deren Schenkel (29,30) die Gelenke (22,23) zur Verbindung mit den benachbarten Laschengliedern (16 bis 21) und die Vorsprünge (35) aufweisen und deren Stege (34) den Anschlag für die Vorsprünge (35) und/oder die Längsränder (27,28) des nähstfolgenden Laschengliedes (16 bis 21) bilden.

7. Beschlag nach einem der Ansprüche 1 bis 6, dadurch gekennzeichnet, daß die Schenkel (29,30) wenigstens an einer Stirnseite (33) von mindestens einem Laschenglied (15 bis 21) zum Steg (34) hin derart abgeschrägt sind, daß sie gegenüber diesem einen Vorsprung (35) bilden.

8. Beschlag nach einem der Ansprüche 1 bis 7, dadurch gekennzeichnet, daß die einzelnen Laschenglieder (15 bis 21) an den Stirnseiten (33) ihrer Schenkel (29,30) Abschrägungen 35 von unterschiedlicher Neigung und/oder Größe haben.

9. Beschlag nach einem der Ansprüche 1 bis 8, dadurch gekennzeichnet, daß die Schenkel (29,30) um das Maß der Materialdicke (d) der Laschenglieder (15 bis 21) verkröpft sind.

10. Beschlag nach einem der Ansprüche 1 bis 4, dadurch gekennzeichnet, daß die Laschenglieder Winkelstücke sind, deren einer Schenkel die Gelenke zur Verbindung mit den benachbarten Laschengliedern und den Vorsprung aufweist und deren anderer Schenkel den Anschlag für den Vorsprung und/oder für den einen Längsrand des nächstfolgenden Laschengliedes bildet.

11. Beschlag nach einem der Ansprüche 1 bis 10, dadurch gekennzeichnet, daß die schmalen Laschenglieder (40) mit ihrer einen, parallel zu den Gelenkachsen (36) verlaufenden Außenfläche (54) an der entsprechenden Innenwand (55) der benachbarten, breiten Laschenglieder (41) anliegen und an beiden Enden (47 und 48) derart schräg abgeschnitten sind, daß der in der an der Innenwand (55) anliegenden Außenfläche (54) befindliche Schnittrand (52) innenseits oder in der durch die entsprechende Gelenkachse (36) gehenden, zu dieser Außenfläche (54) senkrechten Ebene (51) liegt.

12. Beschlag nach einem der Ansprüche 1 bis 11, dadurch gekennzeichnet, daß zwischen den Schenkeln (59 und 42) aufeinanderfolgender Laschenglieder (40, 41) im Bereich der Gelenke Tellerfedern (60) angeordnet sind.

13. Beschlag nach einem der Ansprüche 1 bis 12, dadurch gekennzeichnet, daß die Gelenke Nietbolzen (46) aufweisen, die je zwei aufeinanderfolgende Laschenglieder (40,41) durchqueren und von Hülsen (57) umgeben werden, die zwischen die jeweils außen liegenden Schenkel (42) von zwei durch das Gelenk miteinander zu verbindenden Laschengliedern (40,41) eingepaßt sind.

14. Beschlag nach einem der Ansprüche 1 bis 13, dadurch gekennzeichnet, daß die Laschenglieder (15 bis 21) aus U- oder winkelförmig gebogenen Blechstücken bestehen.

15. Beschlag nach einem der Ansprüche 1 bis 14, dadurch gekennzeichnet, daß mindestens die schmalen Laschenglieder (40) aus im Querschnitt rechteckigen oder quadratischen Rohrstücken bestehen.

## FIG.1

13

13

12

12

14

11

10

0027660

FIG. 2

FIG. 3

FIG. 4

FIG. 5

Ns 254

FIG.7

FIG.6

**Europäisches Patentamt**

# EUROPÄISCHER RECHERCHENBERICHT

**0027660**
Nummer der Anmeldung

**EP 80 10 6403**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 139 168</u> (HENNIG)<br><br>* Seite 1, Absatz 1; Seite 3, Absätze 1-3; Figuren * | 1,7,9 |
| | -- | |
| | <u>BE - A - 692 661</u> (DEWAET)<br><br>* Seite 4, Absatz 5 - Seite 5, Absatz 1; Figuren * | 1,3 |
| | -- | |
| P | <u>DE - B - 2 830 783</u> (KAUFELD)<br><br>* Anspruch 1; Figuren * | 1 |
| | ---- | |

**KLASSIFIKATION DER ANMELDUNG (Int Cl.³)**

A 47 C 7/38
F 16 G 13/06

**RECHERCHIERTE SACHGEBIETE (Int. Cl.³)**

A 47 C
B 60 N
F 16 G

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Recherchenort | Abschlußdatum der Recherche | Prüfer |
|---|---|---|
| Den Haag | 28-01-1981 | VANDEVONDELE |

X Der vorliegende Recherchenbericht wurde für alle Patentansprüche erstellt.

EPA form 1503.1   06.78